# EUROPÄISCHE PATENTANMELDUNG

(11) **EP 0 529 374 A1**
(43) Veröffentlichungstag der Anmeldung: **03.03.1993**
(21) Anmeldenummer: 92113519.0
(22) Anmeldetag: 07.08.1992
(51) Int. Cl.: H04B 1/16, G11B 15/02, G11B 20/02, G11B 31/00, G11B 33/10

(54) **Rundfunkempfänger mit einer Einrichtung zum zeitverzögerten Aufzeichnen von Tonsignalen**

(30) Priorität: 09.08.1991 DE 4126371
(71) Anmelder: GRUNDIG E.M.V. Elektro-Mechanische Versuchsanstalt Max Grundig GmbH & Co. KG, D-90762 Fürth (DE)
(72) Erfinder: Mederer, Werner, GRUNDIG E.M.V., Max Grundig, W-8510 Fürth (DE)

(57) **Zusammenfassung**

Bei Rundfunkempfängsgeräten, die in herkömmlicher Weise mit einem Aufzeichnungsgerät zur Aufnahme von Tonsignalen kombiniert sind, ist es für den Rundfunkhörer nicht möglich, eine bestimmte Darbietung, z.B. ein Musikstück, komplett aufzuzeichnen, sofern er sich erst nach dem Anspielen der ersten Takte zu einer Aufnahme entschließt.

Mit der vorliegenden Erfindung wird deshalb eine Einrichtung geschaffen, mit deren Hilfe die gerade wiedergegebene Darbietung mit zeitlicher Verzögerung dem Aufzeichnungsgerät zugeführt wird und die den Aufnahmevorgang auf Wunsch automatisch startet, wenn der Anfang der gewünschten Tonfolge aus dem Zwischenspeicher ausgelesen wird.

## Beschreibung

Die Erfindung betrifft gemäß dem Oberbegriff des Patentanspruchs ein Rundfunkempfangsgerät mit einer Einrichtung zur Aufzeichnung von Tonsignalen, wobei das dem Aufzeichnungsgerät zugeführte Signal zeitverzögert wird, um dem Rundfunkhörer eine Bedenkzeit darüber einzuräumen, ob er das aktuell gehörte Tonsignal aufzeichnen möchte oder nicht.

Zeitverzögerungen beim Aufzeichnen von Sprachsignalen sind aus der Diktiergerätetechnik bekannt. Insbesondere bei Handdiktiergeräten, die mit einem akustischen Einschalter versehen sind, soll mit Hilfe der Zeitverzögerung vermieden werden, daß in der Hochlaufphase des Bandantriebsmotors die ersten Silben des vom Mikrofon gelieferten Sprachsignals bei der Aufzeichnung verfälscht oder unterdrückt werden.

Ein Verfahren dieser Art ist in der DE-OS 31 26 430 beschrieben.

Aus der DE-OS 39 21 942 der Anmelderin ist ebenfalls ein Diktiergerät bekannt, bei dem vor der endgültigen Abspeicherung eines Diktates auf Magnetband dieses zunächst in einem digitalen Halbleiterspeicher zwischengespeichert wird, um Korrekturen, insbesondere Einfügungen problemlos durchführen zu können. Erst das überarbeitete Diktat wird aus Gründen der begrenzten Speicherkapazität heutiger Festkörperspeicher auf ein als Massenspeicher dienendes Magnetband übertragen.

Zur vorübergehenden Speicherung von mit einer Kennung versehenen Rundfunksendungen, insbesondere von Verkehrsmeldungen, ist ferner der Einsatz von digitalen Schreib- und Lesespeichern bekannt. Wie der DE-OS 37 06 822 zu entnehmen ist, wird dabei in der Regel der Speicher bei Ausstrahlung der Verkehrsdurchsagekennung mit der zuletzt verbreiteten Verkehrsmeldung überschrieben, so daß der Gerätebenutzer immer die aktuellste Verkehrsnachricht zur Wiedergabe abrufen kann.

Die vorgenannten Verfahren zur Zwischenspeicherung bzw. zur zeitlich begrenzten Speicherung eines Tonsignals geben jedoch keine Anregung zur Lösung der Aufgabe, einem Rundfunkhörer eine Bedenkzeit darüber einzuräumen, ob er ein bestimmtes Musikstück z.B. aufzeichnen möchte, nachdem er es nach den ersten Takten identifiziert hat, ohne daß dabei der bereits abgehörte Anfang der Tonfolge bei der Aufzeichnung verloren geht.

Eine Empfangs- und Aufzeichnungsvorrichtung zur Lösung dieses Problems ist in der DE-OS 40 02 646 offenbart. Die Offenlegungsschrift beschreibt eine Anordnung zur Aufzeichnung von Bild- und/oder Tonsignalen, die einen analogen oder digitalen Überlaufspeicher enthält, mit dessen Hilfe empfangene Bild- oder Tonsignale zeitverzögert einem Aufnahme-Geräteteil zugeführt werden. Schaltet während der zur Verfügung stehenden Signal-Durchlaufzeit des Überlaufspeichers der Gerätebenutzer die Aufzeichnungsvorrichtung auf Aufnahme, so wird die Speicherung der Signalfolge im Überlaufspeicher gestoppt. Die dort bereits gespeicherte Sequenz muß nach Beendigung der Aufnahme auf dem band- oder plattenförmigen Aufzeichnungsträger auf den freien Tonträgerteil vor der gerade beendeten Aufzeichnung überspielt werden, d.h., die beiden Teile z. B. eines Musikstückes, müssen nachträglich "zusammengeschnitten" werden. Für eine bevorzugte Ausführung der beschriebenen Vorrichtung wird deshalb auch vorgeschlagen, beim Einlegen eines Aufzeichnungsbandes bzw. bei Beginn der Aufnahme das Band um die Laufdauer, die der zeitlichen Belegung des Überlaufspeichers entspricht, vorzuspulen.

In einer weiteren Variante der offenbarten Anordnung erfolgt die Überspielung ab dem Start der Aufnahme permanent zeitlich verzögert über den Überlaufspeicher, so daß sich ein nachträglicher Zusammenschnitt erübrigt.

Beide Versionen sind jedoch mit erheblichen Nachteilen verbunden. Im ersten Fall ist es kaum möglich, beim nachträglichen Zusammenschnitt einen störungsfreien, nicht hör- oder sichtbaren Übergang zwischen den beiden Signalfolgen zu erzielen, während im zweiten Fall vor der eigentlichen Aufzeichnung ein leerer Band-Vorspann verbleibt, der in der Laufdauer zeitlich dem nicht belegten Speicherinhalt des Überlaufspeichers bei Beginn der Aufnahme entspricht.

Es ist deshalb Aufgabe der vorliegenden Erfindung, ein Rundfunkempfangsgerät mit einer Aufzeichnungsvorrichtung nach dem Oberbegriff des Patentanspruchs 1 zu schaffen, mit dem innerhalb einer vorgegebenen Bedenkzeit die automatische Aufnahme einer ausgewählten Darbietung ab deren Anfang und ohne Leerstellen auf dem Aufzeichnungsträger eingeleitet werden kann.

Ein weiteres Ziel der Erfindung ist es, dem Gerätebenutzer die Möglichkeit zu geben, durch manuelles Eingreifen eine Aufzeichnung gezielt ab Beginn einer Darbietung zu starten.

Diese Aufgabe wird durch die im Anspruch 1 genannten Merkmale gelöst. Vorteilhafte Ausgestaltungen der Erfindung sind in den Unteransprüchen enthalten.

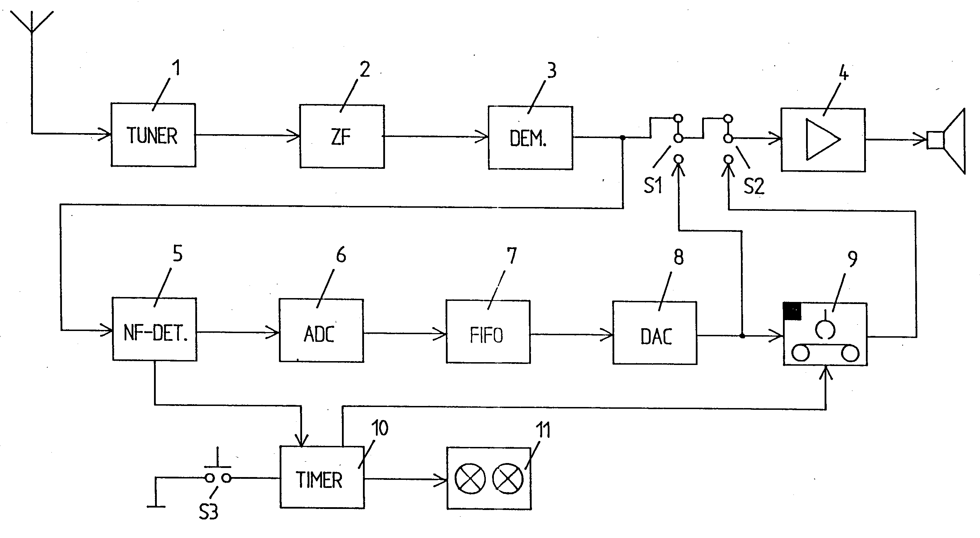

Anhand eines in der Zeichnung dargestellten Ausführungsbeispiels soll die Erfindung näher erläutert werden.

Die einzige Figur zeigt das Blockschaltbild einer Kombination aus Rundfunkempfangs- und Tonaufzeichnungsgerät mit einer Einrichtung zur Zeitverzögerung des dem Aufzeichnungsgerät zugeführten Signals.

In bekannter Weise besteht das Rundfunkempfangsgerät aus dem Tuner 1, der von der Antenne gespeist wird, dem ZF-Verstärker 2 und dem Demodulator 3, dessen Ausgangssignal in der Endstufe 4 verstärkt und auf den
Lautsprecher übertragen wird. Das Ausgangssignal des Demodulators 3 wird außerdem dem NF-Detektor 5 zugeführt, der beipielsweise dazu dient, nach einer Signalpause das Wiedereinsetzen eines NF-Signals zu erkennen und an dieser Stelle ein Steuersignal zu erzeugen. Statt einer Pausenerkennung kann der NF-Detektor 5 aber auch eine Schaltung enthalten, die den Wechsel zwischen den Signalarten "Sprache" und "Musik" feststellt und als Kriterium für die Erzeugung eines Steuersignals verwendet. Schaltungen dieser Art sind z.B. aus der DE-PS 31 15 801 C2 bekannt.

Das Ausgangssignal des NF-Detektors 5 gelangt über den Analog-/Digital-Wandler 6 in den First-In-First-Out-Zwischenspeicher 7, wobei vor der Zwischenspeicherung prinzipiell eine Datenreduktion vorgenommen werden kann, die nach dem Auslesen des Signals aus dem FIFO-Speicher wieder rückgängig gemacht wird. Bei einer Datenrate von z.B. 100 kbit/s wird damit für eine Durchlaufzeit von 10s des binär codierten NF-Signals durch den FIFO-Speicher 7 eine Speicherkapazität von 1 Mbit benötigt. Die dem Zwischenspeicher 7 entnommene Bitfolge wird im Digital-/Analog-Wandler 8 wieder in ein analoges NF-Signals umgesetzt, das nun für eine Aufnahme im Aufzeichnungsgerät 9 zur Verfügung steht. Für die Aufzeichnung können Geräte mit jeglicher Art von Tonträgern verwendet werden.

Das vom NF-Detektor 5 erzeugte Steuersignal startet den Timer 10, der seinerseits zum Startzeitpunkt im Anzeigebaustein 11 ein erstes optisches Signal in Form einer Leuchtdioden- oder alphanumerischen LCD-Anzeige auslöst. Die Ablaufzeit des Timers 10 entspricht nahezu der Durchlaufzeit des binären NF-Signals im FIFO-Speicher 7. Nach Ablauf der vorgegebenen Zeit (im genannten Beispiel: 10 s) erscheint im Anzeigebaustein 11 ein zweites optisches Signal in Form einer andersfarbigen Leuchtdioden-Anzeige, oder es erfolgt ein entsprechender Hinweis im alphanumerischen LC-Display, daß der Anfang der zeitverzögerten Signalfolge den Ausgang des Durchlaufspeichers 7 fast erreicht hat. Zu diesem Zeitpunkt gibt der Tuner 10 ein Startsignal an das Aufzeichnungsgerät 9. Hat nun der Gerätebenutzer während der 10 sekündigen Bedenkzeit seit dem Aufleuchten des ersten optischen Signals im Anzeigebaustein 11 das Aufzeichnungsgerät 9 in Aufnahmebereitschaft geschaltet, so startet automatisch eine Aufnahme ab Beginn der gewünschten Darbietung. Bei späterer Aktivierung des Aufzeichnungsgerätes 9, d.h. nach Auslösen des zweiten optischen Signals im Anzeigebaustein 11, ist keine komplette Aufzeichnung der ausgewählten Signalfolge mehr möglich.

Im Signalweg zwischen dem Demodulatorausgang 3 und dem Endstufeneingang 4 ist der Umschalter S1 eingefügt. Mit dessen Hilfe ist es möglich, wahlweise das unverzögerte oder das verzögerte Signal abzuhören und anstelle einer automatischen Auslösung der Aufnahme den Start der Aufzeichnung von Hand zu bestimmen. Zu diesem Zweck schaltet der Gerätebenutzer zu Beginn der zeitverzögert übertragenen Darbietung das Aufzeichnungsgerät 9 auf "Aufnahme-Start".

Ein halbautomatischer Betrieb ist ebenfalls mit Hilfe des Schalters S3 gegeben. Mit diesem Schalter kann der Zuhörer zu Beginn einer bestimmten Rundfunkdarbietung den Timer 10 manuell starten, wobei nach der Ablaufzeit der Timer, wie vorstehend beschrieben, automatisch ein Startsignal an das Aufzeichnungsgerät 9 liefert.

Der Umschalter S2 im Signalweg zwischen Demodulator 3 und Endstufe 4 dient nur zur Betriebsartenwahl zwischen Rundfunkwiedergabe und Wiedergabe der mit dem Aufzeichnungsgerät 9 abgespeicherten Darbietung.

Im Hinblick auf moderne Übertragungsverfahren, wie z. B. das Radio Daten System oder das Digital Audio Broadcast Verfahren, bei denen programmbegleitende Daten parallel zur Rundfunkdarbietung in codierter Form übertragen werden, kann der NF-Detektor 5 auch einen Decoder enthalten, mit dessen Hilfe die codierten Zusatzinformationen entschlüsselt werden. Sofern nicht explizit Startsignale für bestimmte Darbietungen übertragenen werden, kann z.B. aus der Musik-/Sprache-Kennung ein Steuersignal zum Starten des Timers 10 abgeleitet werden.

Wird als Aufzeichnungsgerät 9 ein digitaler Recorder verwendet, so kann der Digital-/Analog-Wandler 8 entfallen, wenn auf die simultane Abhörmöglichkeit des verzögerten Aufzeichnungssignals verzichtet wird.

Die am Beispiel eines Rundfunkempfängers beschriebene Einrichtung läßt sich in gleicher oder ähnlicher Weise bei allen mit einem Aufzeichnungsgerät kombinierten Empfangseinrichtungen realisieren, bei denen erst nach einer bestimmten Reaktionszeit über die Notwendigkeit einer Aufzeichnung entschieden werden kann. Dazu zählen Telefon-Mitschnittgeräte, Alarmmelder, Funkgerätekombinationen etc.. Ebenso ist bei Fernsehempfangsgeräten in Verbindung mit Videorecordern die Zwischenspeicherung von Bildsignalen denkbar, sofern preiswerte Festkörperspeicher mit entsprechender Speicherkapazität für eine wirtschaftlich vertretbare Realisierung der Verzögerungseinrichtung zur Verfügung stehen.

## Patentansprüche

1. Rundfunkempfangsgerät mit einer Einrichtung zur zeitverzögerten Aufzeichnung von Tonsignalen auf einem band- oder plattenförmigen Aufzeichnungsträger, mit einem Analog-/Digital-Wandler (6), einem FIFO-Zwischenspeicher (7), einem Digital-/Analog-Wandler (8) und einem NF-Detektor (5),
**dadurch gekennzeichnet,** daß innerhalb einer begrenzten Bedenkzeit eine aktuell empfangene Rundfunkdarbietung von Anfang an ohne unerwünschte Leerstellen auf dem Tonträger aufgezeichnet werden kann, indem
a) der NF-Detektor (5) beim Erscheinen eines NF-Signals im Anschluß an eine Signalpause automatisch ein Steuersignal an einen Timer (10) liefert,
b) der Timer (10) einer Anzeigeeinheit (11) zugeordnet ist, die beim Starten des Timers (10) ein erstes optisches Signal und nach Ablauf der dem Durchlauf des NF-Signals durch den FIFO-Speicher (7) entsprechenden Zeit ein zweites optisches Signal erzeugt, wobei die beiden Signale ein Zeitfenster markieren, innerhalb dessen eine Aufzeichnung der Rundfunkdarbietung von Anfang an erfolgen kann,
c) der Timer (10) nach Ablauf der dem Durchlauf des NF-Signals durch den FIFO-Speicher (7) entsprechenden Zeit ein Startsignal an das Aufzeichnungsgerät (9) gibt und
d) das Aufzeichnungsgerät (9) aufgrund des Startsignals den Aufnahmevorgang automatisch startet, wenn es zuvor innerhalb des besagten Zeitfensters vom Gerätebenutzer in Aufnahmebereitschaft versetzt wurde.

2. Rundfunkempfangsgerät nach Anspruch 1,
**dadurch gekennzeichnet,** daß zum manuellen Starten einer Aufnahme der Eingang der Endstufe (4) über einen Umschalter (S1) wahlweise vom Demodulatorausgang (3) auf den Ausgang des Digital-/Analog-Wandlers (8) umschaltbar ist, so daß eine zunächst unverzögert wiedergegebene Rundfunkdarbietung nochmals rückblickend abgehört werden kann.

3. Rundfunkempfangsgerät nach Anspruch 1,
**dadurch gekennzeichnet,** daß zur halbautomatischen Auslösung eines Aufnahmestarts der Timer (10) über einen Schalter (S3) manuell gestartet werden kann.

4. Rundfunkempfangsgerät nach Anspruch 1,
**dadurch gekennzeichnet,** daß der NF-Detektor (5) einen Signalartenwechsel zwischen Sprache und Musik erkennt und als Kriterium zum Steuern des Timers (10) auswertet.

5. Rundfunkempfangsgerät nach Anspruch 1,
**dadurch gekennzeichnet,** daß der NF-Detektor (5) einen Decoder für im Rundfunksignal enthaltene Steuer-Codes enthält und daraus abgeleitete Startsignale als Kriterium zum Steuern des Timers (10) verwendet.

6. Rundfunkempfangsgerät nach einem der vorstehenden Ansprüche,
**dadurch gekennzeichnet,** daß das dem FIFO-Zwischenspeicher (7) entnommene Signal ohne Digital-/Analog-Wandlung direkt einem digitalen Aufzeichnungsgerät (9) zugeführt wird.
